# EUROPEAN PATENT SPECIFICATION

(11) **EP 1 736 114 B1**
(45) Date of publication and mention of the grant of the patent: **24.09.2008**
(21) Application number: 06012794.1
(22) Date of filing: 22.06.2006
(51) Int. Cl.: A61C 9/00

(54) **Improved dental precision models**
Verbesserte dentale Präzisionsmodelle
Modèles dentaires de précision améliorés

(30) Priority: 22.06.2005 IT TO20050437
(43) Date of publication of application: 27.12.2006
(73) Proprietor: Bianchetto Buccia, Alberto, 13900 Cossato BI (IT)
(72) Inventor: Bianchetto Buccia, Alberto, 13900 Cossato BI (IT)
(74) Representative: Lotti, Giorgio

(56) References cited:
- DE-A1- 3 214 856
- DE-U1- 9 107 093
- US-A- 4 767 330
- US-A- 4 954 081

## Description

The subject of the invention consists in improvements to dental precision models in the odontotechnical field.

Known in the odontotechnical sector are various types of techniques for constructing precision models. The methods most widely used envisage that the base of the model is made of a gypsum (less advanced technology) or of Teflon/plastic (more advanced technique and actual state of the art).

The method with the gypsum base first of all envisages casting of the impression; once the gypsum has hardened, the model is removed from the impression and is then squared, taking care that the bottom part of the model is as smooth as possible. Next, using a machine referred to as pin drill, drillings are made at the base of the model in the parts that will then have to be divided by the operation of sectioning.

Once the holes are completed, conical or cylindrical pins are glued with an adhesive product such as cyano-acrylate. At this point, insulation of the base and of the pins with the aid of a special oil is performed.

Next, the dental arch is positioned in the base-socket-mould former, after which the gypsum is poured into it until it reaches the base of the model. When the gypsum has hardened, the model is thus completed, and the parts concerned can be sectioned.

This system envisages an excessively long working cycle for the construction of the model. In addition, a considerable amount of gypsum is used, and there is the risk that two different rates of expansion of the gypsum (model and base of the model) will occur. Also the use of purposely designed pin-drilling machinery entails the need for operations of maintenance of the machine and milling thereof. Finally, the system also involves the use of a large amount of glue and of insulator.

The method that uses a Teflon/plastic base envisages positioning of the impression on a metal base with the aid of plasticine. The Teflon plate is positioned in the bottom part of the metal base and, thanks to a centring system, remains set perfectly underneath the impression previously positioned.

At this point, machining is performed using machinery for drilling the Teflon plate in the parts that will then have to be divided by the sectioning operation. The plate thus drilled is extracted from the metal base, and the conical pins are positioned in the holes that have been made.

Next, casting of the impression still positioned on the metal base is carried out, after which, thanks to the guides present thereon, the Teflon plate containing the inserted pins is rested to form a cap. When the gypsum has hardened, after approximately 30 minutes, the model is ready to be sectioned. This system envisages a reduced number of steps as compared to the previous system, entails a reduced use of gypsum, does not require use of glues and insulating agents, is not affected by two different rates of expansion of the gypsum, and a greater precision is noted in the completed model.

Also this system presents, however, considerable disadvantages.

First of all, the Teflon plate can be used just once or at the most twice. As for the system previously mentioned, there are problems of maintenance regarding the machinery used, taking into account that this is much more costly (approximately twice as much) as compared to the previous technique. Then, in order to check articulation, the system requires a further plate containing a magnet, and if the model is cleaned with a steam sterilizer there is the risk of distorting the plate slightly.

Finally, an excessive attention is required when the gypsum is poured into the impression to prevent displacement thereof from its original position on the metal base with the plasticine; otherwise, the pins will then be off centre.

There also exists a third system described in the patent No. US 4.767.330, which consists in creating a model which, at the bottom, is rendered fixed to a support made of plastic material mixed with a powder of magnetic or magnetizable material. The base plate is provided with a rail indented on the external surfaces so as to form referencing means for positioning and centring of the support of the model that is applied on the base. A magnetized strip is embedded in the rail to bring about magnetic adherence of the support to the rail itself.

Cutting from the model of the tooth corresponding to the one being treated is carried out together with the underlying supporting stretch.

This latter system involves different processing steps, such as casting of the impression and polishing thereof, pouring of the support and polishing thereof, gluing together of the impression and of the support with possible risks of imprecision. In addition, since the models are made of two different materials, i.e., that of the impression and that of the support, there are risks of different rates of expansion of the two objects with the consequent risk of deformations that have repercussions on re-positioning of the tooth on which work has been carried out.

The step of gluing of the impression and of the support is very delicate and, in the even of them coming apart during the step of selection of the teeth in question or during a step of milling thereof, it would be impossible to restore the original position of the two items with respect to one another.

A further serious drawback of this system depends upon the fact that, since the support is entirely magnetized and faces a strip of the metal base which is also entirely magnetized, there can arise problems of reversal of polarity in the teeth sectioned from the model, a fact that causes repulsion of the teeth by the base instead of adhesion on said base.

The dental model proposed by the present invention arises from the frequent need to find a practical, precise, fast and inexpensive solution for creating dental models, which is the starting point of any type of odontotechnical operation.

In order to achieve this purpose, the invention proposes creation of a reference base, preferably but not necessarily made of metal, with characteristics for conveniently enabling mass production, which bears a complex toothed profile in relief having the shape of a dental arch, said profile constituting the precise reference for future positioning of the dental model either completely or partially. The dental model will have inside it magnets, which, by exerting a mutual action of attraction on the surface of the metal base, will keep the model in a position constrained thereto; the shape of the relief, which may vary, present on the base will prevent movements in the other two directions of the plane.

The method provides the master dental model made of gypsum or equivalent compound with parts that can be sectioned and can be slid out from a metal base.

For the above and further purposes that will be understood more clearly from what follows the invention proposes dental precision models for the odontotechnical field according to Claim 1.

The dental model according to the invention will now be described in two preferred embodiments thereof with reference to the annexed plate of drawings, in which :
Figures 1 and 2 represent respectively the dental impression with the base of the model and the equipment that is used in a first embodiment of the invention;
Figure 3 illustrates the dental model and the base according to the invention in its first embodiment;
Figure 4 is a portion of the base of Figure 3;
Figure 5 is the cross section V-V of Figure 4;
Figure 6 illustrates the base of Figure 3 in a second embodiment of the invention;
Figure 7 is a cross section according to the trace VII-VII of Figure 6;
Figure 8 is the view of a detail of Figure 6; and
Figures 9 and 10 are enlarged views of the detail A of Figure 7 in two different operating conditions.

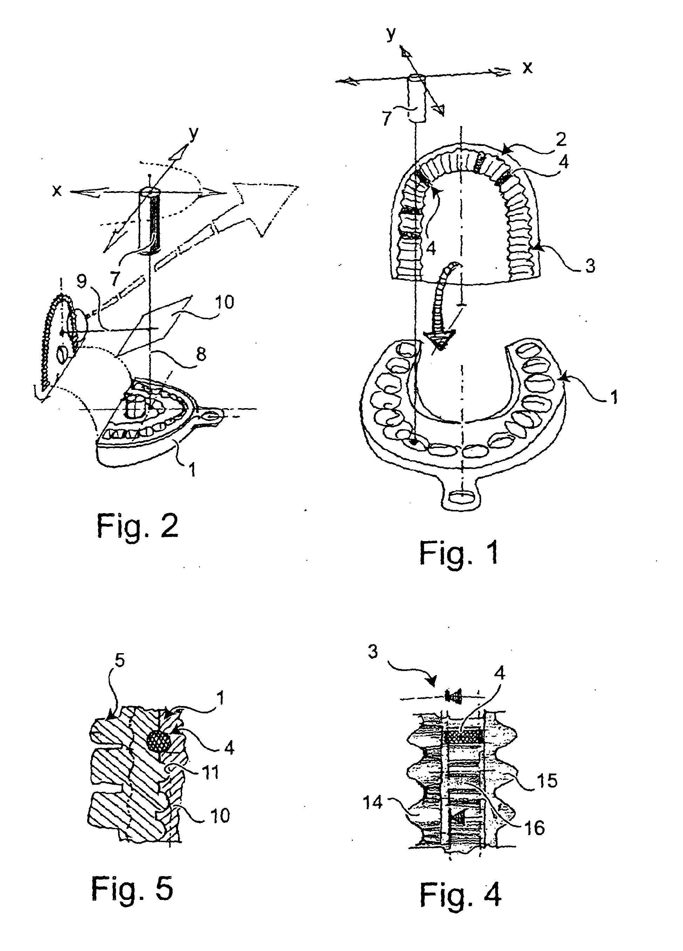

With initial reference to the embodiment of Figures 1-5, the method with which the device according to the invention is obtained is described in what follows.

Once the dental impression 1 has been taken, it is located in a centring device, and a base 2, which is usually but not necessarily made of metal and is shaped like a dental arch and at the centre of which there is a structure 3 with a complex profile in relief, is aligned in a centring device aligned to the first device (see Figures 1 and 2). The structure 3 will be defined more clearly hereinafter.

Elements 4, in the form of pins made of magnetized material, which consequently will be referred to hereinafter as magnets, are pre-installed in purposely provided seats made in the structure 3 of the metal base, in positions corresponding to the centre (see Figures 4 and 5) of each part (tooth) which needs to be sectioned in order to carry out work thereon, with the aid of a pointing system 7 (laser or the like) moving along the axes x and y. In the plane of lie of the cast, the pointing system 7 identifies the point of correspondence between the tooth and the slot on the base 2 in which a magnet 4 is to be positioned. The system envisages two pointing beams (see Figure 2), one of which 8 indicates the part of the impression to be worked on and the other 9 the area of the toothed base where the magnets 4 are to be positioned. A reflection system 10 can be used for governing the pointing beams. This operation is repeated for all the teeth or parts concerned.

At this point, the gypsum is poured into the impression 1 and over all the top surface of the metal base 2, on which the magnets 4 have been pre-installed, in an appropriate position to enable temporary joining of the gypsum-cast impression 1 to the metal base: with the gypsum still plastic the base is turned over so as to be superimposed precisely on the impression. The gypsum cast is, thus, at the centre of the sandwich between the impression and the base and, once it has hardened, comes to form the dental model 5. The magnets 4 attached thereto remain englobed in the gypsum still in the plastic phase of the model (see Figures 4 and 5).

When the gypsum has hardened, the device for impressions 1 and the coupled metal base 2 are removed, and the impression is removed from the hardened gypsum, after which removal from the metal base is performed, possibly with the aid of an extractor system.

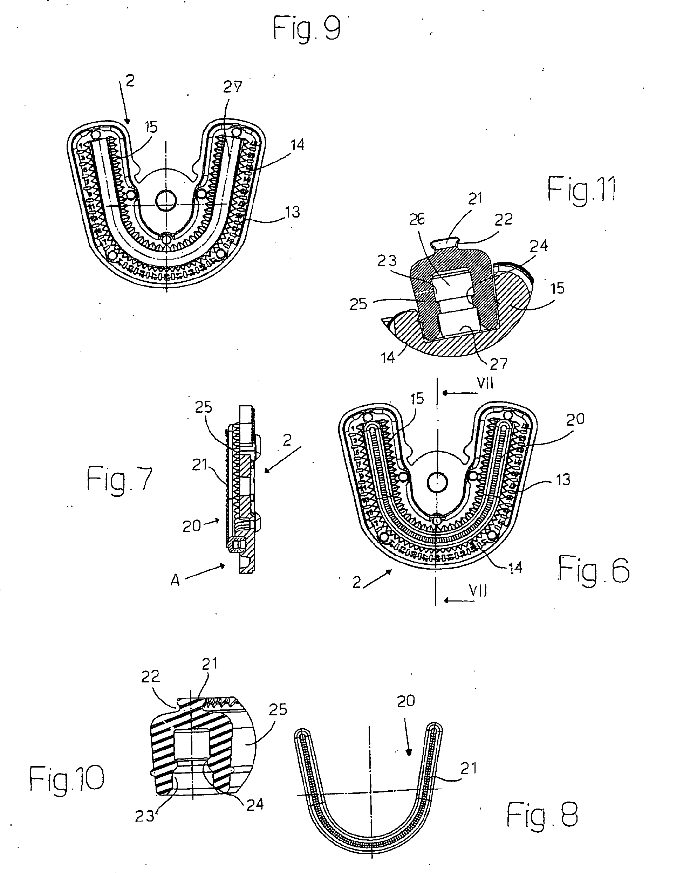

Once the dental model 5 is obtained (see Figure 6), sectioning 6 thereof is carried out according to the working requirements.

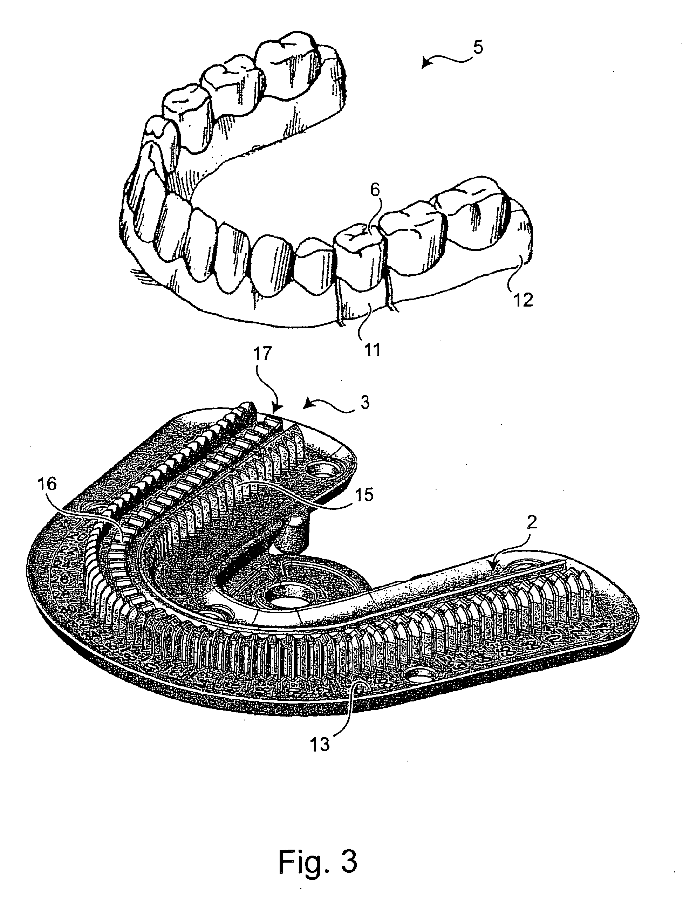

Once work has been completed, the sectioned gypsum model 6 is re-positioned on the metal base 2, the correct position of which is determined (see Figure 3) by the structure 3, and in particular by its double side rack 14 and 15, and by the presence of a numbering 13 at its side. Sealing is instead ensured by the presence of the metal magnet 4 embedded in the sectioned gypsum 6 (see Figure 5), which comes to be housed in the corresponding seat 16 (Figure 3) of a guide 17 set between the racks 14 and 15 of the structure 3.

The embodiment now described envisages that the elements 4 are magnetic and the guide 17 is simply made of (ferromagnetic) metal so that the magnets 4 adhere by magnetic force in the seats 16 of the guide 17. It is clear, however, that the invention also envisages the reverse condition, namely, the one in which the elements 4 are made of metal, for example of ferromagnetic material, and the guide 17 is magnetized or else that both the elements and the guide are magnetized with opposite polarities. The effect of adhesion of the elements 4 on the seats 16 of the guide 17 is obviously once again the same.

The invention envisages the possibility of unlimited re-use of the base and does not require further plates for checking articulation of the model. In addition, the system involves very little maintenance for the machinery in so far as there is no milling. An excellent centring device is obtained in so far as no plasticine is used, nor are glues or insulating agents used and, in the case of cleaning with a steam sterilizer, the base is not modified.

The embodiment illustrated in Figures 6-10 has the purpose of avoiding the step of centring of the impression, which in the previous embodiment is illustrated with reference to Figures 1 and 2.

This solution envisages that the space between the racks 14 and 15 of the structure 3 (see Figure 3) of the base 2 will be left empty, i.e., that the guide 17 and the corresponding seats 16 are not provided.

In its place, a plastic element 20 is inserted, of a shape such as to copy the seat, now empty, comprised between the racks 14 and 15. The plastic element 20, as may be noted more clearly in Figures 8 and 10 has a substantially C-shaped or horse-shoe cross section provided on the outside and at the top with a protuberance 21 with lateral undercuts 22. In the internal part, i.e., the one comprised between the side walls 25, the element 20 is hollow, and the cavity 23 has the intermediate portion 24 of restricted width as compared to the rest.

Using this solution, the procedure is the one described in what follows.

The gypsum is poured into the impression 1 (see Figure 1) and over all the top surface of the base 2 on which the plastic element 20 has been pre-installed.

With the gypsum still plastic, the impression 1 is turned over until it comes to be superimposed precisely on the base 2. The gypsum thus cast is consequently located at the centre of a sandwich between the impression 1 and the base 2 and, once it has hardened, comes to form the dental impression 5 (see Figure 3).

At this point, the impression 1 is detached from the ensemble, so bringing to light the dental model 5, which will have inside it, visible from the underside, the plastic element 20 that remains fixed to the model in so far as the gypsum has filled the undercuts 22 of the appendage 21 and, since only the plastic element rests on the base 2, nothing stops this separating from the base itself in order to remain fixed to the model 5.

Identified on the scale 13 of the base are references of the teeth of the model that are to be worked on; then the model 5 is separated also from the base.

Now, it only remains to section the tooth 6 (see Figure 3) to be worked on and to insert a pin 26 of magnetic material into the empty seat of the stretch of plastic element 20 that remains embedded in the tooth 6.

The pin 26 will have a shape designed to copy the walls 23 and 24 of the seat of the element 20 to prevent it from possibly accidentally sliding out.

Once this operation is completed, the tooth 6 may be positioned on the metal base 2 in the seat 27 between the racks 14 and 15 in the position previously defined on the graduated scale 13, i.e., in the exact relative position.

Also this second embodiment now described envisages that the elements 26 are magnetic and the seat 27 is simply made of (ferromagnetic) metal so that the magnets 26 adhere by magnetic force in the seat 27 between the racks 14 and 15. It is clear, however, that the invention also envisages the reverse condition, namely, the one in which the elements 26 are made of metal, for example ferromagnetic material, and the seat 27 is magnetized or else that both the elements and the guide are magnetized with opposite polarities; the effect of adhesion of the elements 26 on the seat 27 is obviously once again the same.

## Claims

1. A precision dental model for the odontotechnical field of the type constituted by a model (5) reproducing the denture associated to a base (2) provided with means for referencing (13) and positioning (14, 15) the model (5) and the denture that the model reproduces, **characterized in that** the model is provided with a plurality of distinct elements (4, 26); each element being arranged in positions corresponding only to the teeth to be worked on, and **in that** the base (2) carries seats (16, 27) for housing the teeth (6) and elements (4, 26) associated thereto; the elements (4, 26) and the seats (16, 27) being made of a material such as to exert a magnetic force of mutual attraction.

2. The dental model according to Claim 1, **characterized in that** the elements (4, 26) are rendered fixed to the model (5) during construction thereof.

3. The dental model according to Claim 1, **characterized in that** the means for referencing the base (2) is a graduated scale (13), whilst the positioning means are two side racks set alongside one another (14 and 15).

4. The dental model according to Claim 2, **characterized in that** the seats (16) in which the elements (4) are housed are made in a guide (17) that extends between the racks (14, 15).

5. The dental model according to Claim 4, **characterized in that** the elements (4) are magnetic pins that project partially from the model on the side opposite to the one in which the teeth, and the seats (16) of the base, that receive the pins, are cradles made of ferromagnetic material corresponding to the pins made along the guide (17).

6. The dental model according to Claim 1, **characterized in that** the elements (4) are installed in the purposely provided seats (16) made in the structure (3) of the base, at the centre of each tooth, which will then be sectioned to enable work to be carried out thereon, with the aid of a pointing system (7) moving along the axes x and y; the pointing system (7) identifying, in the plane of lie of the cast, the point of correspondence between the tooth and the slot on the base (2) in which each element (4) is to be positioned.

7. The dental model according to Claim 6, **characterized in that** the pointing system (7) envisages two pointing beams, one of which (8) indicates the part of the impression to be worked on and the other (9) the area of the toothed base where the elements (4) are to be positioned; and a reflection system (10) governs the pointing beams.

8. The dental model according to Claim 1, **characterized in that:** the dental model (5) bears embedded a plastic element (20) originally placed in a removable way in a seat (27) made in the base (2) between said positioning means (14, 15); and the plastic element (20) extends throughout the length of the model (5) and envisages seats for housing said elements (26) in such a way that these can face the seat (27) of the base when the teeth to be worked on of the model (5) are sectioned from the model itself, each incorporating one or more of said elements (26).

9. The dental model according to Claim 8, **characterized in that** the plastic element (20) has a substantially C-shaped cross section so as to be open on the bottom of the model (5) to present the element (26) directly facing the seat (27) of the base (2).

10. The dental model according to Claim 8, **characterized in that** the plastic element (20) envisages a top longitudinal protuberance (21) provided with undercuts (22) to guarantee gripping of the gypsum of the model (5).

## Patentansprüche

1. Präzisionsdentalmodell für den zahntechnischen Bereich von der Art, welche durch ein Modell (5), dass das Gebiss nachbildet, welches mit einer Basis (2), die mit Mitteln zur Referenzierung (13) und Positionierung (14, 15) des Modells (5) ausgestattet ist, verbunden ist, und dem Gebiss, welches das Modell nachbildet, dargestellt ist,
**dadurch gekennzeichnet, dass** das Modell mit einer Vielzahl von ausgeprägten Elementen (4, 26) versehen ist; wobei jedes Element in Positionen angeordnet ist, welche nur den zu bearbeitenden Zähnen entsprechen, und dass die Basis (2) Aufnahmen (16, 27) zum Aufnehmen der Zähne (6) und der damit verbundenen Elemente (4, 26) trägt; wobei die Elemente (4, 26) und die Aufnahmen (16, 27) aus einem Material hergestellt sind, der Art, um eine magnetische Kraft gegenseitiger Anziehung auszuüben.

2. Dentalmodell nach Anspruch 1,
**dadurch gekennzeichnet, dass** die Elemente (4, 26) an dem Modell (5) während dessen Aufbau befestigt sind.

3. Dentalmodell nach Anspruch 1,
**dadurch gekennzeichnet, dass** die Mittel zur Referenzierung der Basis (2) eine abgestufte Skalierung (13) sind, während die Positionierungsmittel zweiseitige Halterungen sind, welche nebeneinander platziert sind (14, 15).

4. Dentalmodell nach Anspruch 2,
**dadurch gekennzeichnet, dass** die Aufnahmen (16), in welchen die Elemente (4) aufgenommen sind, in einer Führung (17) erzeugt sind, welche sich zwischen den Halterungen (14, 15) erstreckt.

5. Dentalmodell nach Anspruch 4,
**dadurch gekennzeichnet, dass** die Elemente (4) magnetische Stifte sind, die teilweise aus dem Modell auf der der mit den Zähnen gegenüberliegende Seite hinausragen, und das die Aufnahmen (16) der Basis, welche die Stifte aufnehmen, wiegen aus einem ferromagnetischen Material sind, die zu den entlang der Führung (17) aufgestellten Stifte korrespondieren.

6. Dentalmodell nach Anspruch 1,
**dadurch gekennzeichnet, dass** die Elemente (4) in den absichtlich zur Verfügung gestellten Aufnahmen (16), welche im Aufbau (3) der Basis hergestellt sind, an der Mitte jedes Zahnes installiert sind, welcher dann aufgeteilt werden wird, um die Vornahme einer Bearbeitung daran zu ermöglichen, unter zur Hilfenahme von einem Zeigesystem (7), welches sich entlang der Achsen x und y bewegt; das Zeigesystem (7) bezeichnet, in der Platzierungsebene des Abgusses, den Punkt der Übereinstimmung zwischen dem Zahn und der Nut auf der Basis (2), in welcher jedes Element (4) zu positionieren ist.

7. Dentalmodell nach Anspruch 6,
**dadurch gekennzeichnet, dass** das Zeigesystem (7) zwei Zeigeleitstrahlen vorsieht, von welchen einer (8) den zu bearbeitenden Teil des Abdruckes und der andere (9) den Bereich der verzahnten Basis anzeigt, wo die Elemente (4) zu positionieren sind; und ein Reflektionssystem (10) leitet die Zeigeleitstrahlen.

8. Dentalmodell nach Anspruch 1,
**dadurch gekennzeichnet, dass:** das Dentalmodell 5 eingebettet ein Plastikelement (20) trägt, welches ursprünglich in einer entfernbaren Art und Weise in einer Aufnahme (27) platziert ist, die in der Basis (2) zwischen den besagten Mitteln (14, 15) erzeugt ist; und das sich das Plastikelement (20) über die Länge des Modells (5) erstreckt und Aufnahmen zum Aufnehmen der besagten Elemente (26) in einer Art und Weise vorsieht, dass diese der Aufnahme (27) der Basis gegenüber stehen können, wenn die zu bearbeitenden Zähne des Modells (5) von dem Modell selber aufgeteilt werden, jeweils eines oder mehrere der besagten Elemente (26) aufnehmend.

9. Dentalmodell nach Anspruch 8,
**dadurch gekennzeichnet, dass** das Plastikelement (20) einen hauptsächlich C-förmige Querschnitt aufweist, um an der Unterkante des Modells (5) geöffnet zu sein, um das Element (26) aufzuzeigen, welches der Aufnahme (27) der Basis (2) direkt gegenüber steht.

10. Dentalmodell nach Anspruch 8,
**dadurch gekennzeichnet, dass** das Plastikelement (20) eine obere, längliche Ausstülpung (21) vorsieht, die mit Hinterschnitten (22) versehen ist, um ein Greifen des Gipses des Modells (5) zu garantieren.

## Revendications

1. Modèle dentaire de précision dans le domaine de la technique dentaire, du type constitué par un modèle (5) reproduisant la prothèse associée à une base (2) dotée de moyens de repérage (13) et de positionnement (14, 15) du modèle (5) et de la prothèse que le modèle reproduit, **caractérisé en ce que** le modèle est doté d'une pluralité d'éléments distincts (4, 26), chaque élément étant disposé dans des positions correspondant uniquement aux dents sur lesquelles il faut travailler et **en ce que** la base (2) présente des logements (16, 27) pour abriter les dents (6) et les éléments (4, 26) qui y sont associés ; les éléments (4, 26) et les logements (16, 27) étant réalisés en un matériau permettant d'exercer une force magnétique d'attraction réciproque.

2. Modèle dentaire selon la revendication 1, **caractérisé en ce que** les éléments (4, 26) sont fixés au modèle (5) pendant sa construction.

3. Modèle dentaire selon la revendication 1, **caractérisé en ce que** le moyen de repérage de la base (2) est une échelle graduée (13), tandis que le moyen de positionnement est constitué par deux racks latéraux installés le long l'un de l'autre (14 et 15).

4. Modèle dentaire selon la revendication 2, **caractérisé en ce que** les logements (16) dans lesquels les éléments (4) sont abrités sont ménagés dans un guide (17) qui s'étend entre les racks (14,15).

5. Modèle dentaire selon la revendication 4, **caractérisé en ce que** les éléments (4) sont des broches magnétiques qui se projettent partiellement depuis le modèle sur le côté opposé à celui où se trouvent les dents, et les logements (16) de la base, qui reçoivent les broches, sont des cavités réalisées en matériau ferromagnétique correspondant aux broches réalisées le long du guide (17).

6. Modèle dentaire selon la revendication 1, **caractérisé en ce que** les éléments (4) sont installés dans les logements prévus dans ce but (16) ménagés dans la structure (3) de la base, au centre de chaque dent, qui sera ensuite sectionnée pour permettre de travailler dessus, à l'aide d'un système de pointage (7) se déplaçant le long des axes x et y ; le système de pointage (7) identifiant, dans le plan de la coulée, le point de correspondance entre la dent et la fente sur la base (2) dans laquelle chaque élément (4) doit être positionné.

7. Modèle dentaire selon la revendication 6, **caractérisé en ce que** le système de pointage (7) prévoit deux faisceaux de pointage, l'un d'eux (8) indiquant la partie de l'impression sur laquelle il faut travailler et l'autre (9) la zone de la base dentée où les éléments (4) doivent être positionnés ; et un système de réflexion (10) commande les faisceaux de pointage.

8. Modèle dentaire selon la revendication 1, **caractérisé en ce que** : le modèle dentaire (5) contient un élément en plastique (20) disposé à l'origine de façon amovible dans un logement (27) ménagé dans la base (2) entre lesdits moyens de positionnement (14, 15); et l'élément en plastique (20) s'étend sur la longueur du modèle (5) et prévoit des logements pour abriter lesdits éléments (26), de sorte que ceux-ci puissent faire face au logement (27) de la base quand les dents sur lesquelles il faut travailler à partir du modèle (5) sont sectionnées dudit modèle, chacun intégrant un ou plusieurs desdits éléments (26).

9. Modèle dentaire selon la revendication 8, **caractérisé en ce que** l'élément en plastique (20) a une section transversale sensiblement en forme de C, de façon à être ouvert sur le fond du modèle (5) afin de présenter l'élément (26) directement face au logement (27) de la base (2).

10. Modèle dentaire selon la revendication 8, **caractérisé en ce que** l'élément en plastique (20) prévoit une saillie longitudinale supérieure (21) dotée de découpes inférieures (22) pour garantir la saisie du gypse du modèle (5).
